# NEUE EUROPÄISCHE PATENTSCHRIFT

(11) **EP 2 878 233 B2**
(45) Veröffentlichungstag und Bekanntmachung des Hinweises auf die Entscheidung über den Einspruch: **03.08.2022**
(45) Hinweis auf die Patenterteilung: 15.02.2017
(21) Anmeldenummer: 14195462.8
(22) Anmeldetag: 28.11.2014
(51) Int. Cl.: A47F 3/04, E06B 3/663

(54) **Scheibenverbund**
Glass assembly
Alliage des vitres

(30) Priorität: 28.11.2013 DE 102013113166; 21.05.2014 DE 102014107165
(43) Veröffentlichungstag der Anmeldung: 03.06.2015
(73) Patentinhaber: PAN-DUR Holding GmbH & Co. KG, 97944 Boxberg (DE)
(72) Erfinder: Weiss, Albert, 74706 Osterburken (DE)
(74) Vertreter: Canzler & Bergmeier Patentanwälte Partnerschaft mbB

(56) Entgegenhaltungen:
- EP-A1- 0 138 782
- EP-A1- 0 355 209
- WO-A1-02/100636
- WO-A1-2011/016000
- WO-A1-2012/163748
- WO-A1-2014/009244
- WO-A2-2012/050308
- DE-A1- 4 407 892
- DE-A1-102011 009 879
- DE-B- 1 009 771
- DE-U1- 29 724 242
- FR-A1- 2 594 479
- GB-A- 2 162 933
- GB-A- 2 202 570
- JP-U- 3 179 619
- JP-U- S5 760 565
- US-A- 2 011 557
- US-A- 2 070 331
- US-A- 2 275 812
- US-A- 3 097 061
- US-A- 3 441 924
- US-A- 4 660 903
- US-A- 5 017 433
- US-A1- 2008 031 991
- US-A1- 2009 192 265
- US-A1- 2009 291 238
- US-A1- 2020 021 130
- US-B1- 6 541 083
- WIKI Seite "Transparent und Translucent", "Grundwissen Tore und Türen".
- Übersetzung JP 3179619 U in English
- Übersetzung JP S5760565 U in English

## Beschreibung

Die vorliegende Erfindung betrifft einen Scheibenverbund. Generell sei an dieser Stelle darauf hingewiesen, dass der Scheibenverbund für beliebige Zwecke zum Einsatz kommen kann. Beispielsweise wäre es denkbar, den Scheibenverbund als Tür, Seiten- oder Zwischenwand eines Warenpräsentationsmöbels, vorzugsweise eines Kühlmöbels, einzusetzen. Ebenso ist es denkbar, dass der Scheibenverbund ein Fenster, eine Glastrennwand oder ein sonstiges lichtdurchlässiges Element bildet.

DE102011009879A1 offenbart einen Scheibenverbund gemäß dem Oberbegriff des Anspruchs 1. FR2594479A1 offenbart ein Verfahren zur Herstellung eines Scheibenverbunds gemäß dem Oberbegriff des Anspruchs 10.

Der Scheibenverbund zeichnet sich in jedem Fall dadurch aus, dass er wenigstens zwei, beispielsweis parallel zueinander verlaufende, transparente Scheiben umfasst (die vorzugsweise gleich groß sind), wobei die Scheiben in einem Randbereich des Scheibenverbunds zumindest abschnittsweise ausschließlich mit Hilfe eines transparent ausgehärteten Klebers verbunden sind. Während parallel zueinander verlaufende Scheiben bevorzugt sind, können die Scheiben selbstverständlich auch nicht-parallel zueinander verlaufen. Die hieraus resultierenden unterschiedlich großen Abstände der Scheiben zueinander werden schließlich durch den Kleber überbrückt, so dass auch nicht-parallel verlaufende Scheiben in ihrem Randbereich oder auch in dazwischen liegenden Bereichen vollständig oder auch nur teilweise miteinander verbunden sein können. Auch wenn der Scheibenverbund weitere Elemente, beispielsweise die im Folgenden noch genannten Verstärkungen, umfassen kann, werden die Scheiben vorzugsweise ausschließlich (bzw. unterstützt durch die Verstärkungen) durch den Kleber verbunden, so dass keine weiteren Verbindungselemente, wie beispielsweise Metallrahmen oder ähnliches, vorhanden sein müssen. Im Übrigen muss sich der Kleber nicht über den gesamten umfangsseitigen Randbereich erstrecken, so dass es auch ausreichend ist, wenn der Kleber nur in einem oder mehreren Abschnitten des Randbereichs (beispielsweise nur im Bereich einer oder mehrerer Stirn- oder Seitenbereiche eines rechteckigen Scheibenverbunds) angeordnet ist. Neben einer Verbindung der Scheiben in deren umlaufenden Randbereich ist auch eine partielle oder vollflächige Verbindung in den übrigen Bereichen denkbar.

Vorteilhaft ist es, wenn der Scheibenverbund im Bereich wenigstens zweier Eckbereiche eine zwischen den, beispielsweise parallel verlaufenden, Scheiben angeordnete Verstärkung zur Anbindung an einen Träger aufweist. Bei dem Träger kann es sich um ein Rahmenelement handeln, das der Aufnahme und beweglichen Lagerung des Scheibenverbunds dient (denkbar ist beispielsweise, dass es sich bei dem Träger um einen Abschnitt eines Kühlmöbels handelt). Selbstverständlich können ein oder mehrere Verstärkungselemente auch an anderen Stellen des Scheibenverbunds angeordnet sein, wobei sie sich in jedem Fall zumindest teilweise zwischen zwei benachbarte Scheiben erstrecken sollten. Auch ist es zweckmäßig, eine oder mehrere der vorhandenen Verstärkungen zumindest teilweise in den Kleber einzubetten, um die Stabilität des Scheibenverbunds zu erhöhen.

Ferner ist es denkbar, dass der Scheibenverbund nur im Bereich einer Ecke oder einer Seite (z. B. der im vorgesehenen Einsatz nach oben weisenden Stirnseite) mit einer Verstärkung ausgerüstet ist. Insbesondere wäre es denkbar, dass der Scheibenverbund lediglich über eine Verstärkung hängend montierbar ist. Neben der der Anbindung an ein entsprechendes Trägergestell (z. B. eines Kühlmöbels) dienenden Verstärkung(en) können zwischen den einzelnen Scheiben selbstverständlich auch zusätzliche Verstärkungen angeordnet sein, die nicht der Anbindung, sondern lediglich der Stabilisierung des Scheibenverbunds dienen, wobei auch die zusätzlichen Verstärkungen durch den beschriebenen Kleber gebildet sein können.

Vorteilhaft ist es, wenn die Verstärkungen jeweils wenigstens eine von außen zugängliche Vertiefung, z. B. eine Bohrung, und/oder einen von außen zugänglichen Bolzen aufweisen, über die der Scheibenverbund mit einem Träger verbindbar ist. Der Scheibenverbund kann hierdurch um eine Achse schwenkbar gelagert werden, die durch die beiden Verstärkungen gebildet wird.

Vorteilhaft ist es, wenn die Verstärkungen im Bereich zweier gegenüberliegender Stirnseiten des Scheibenverbunds, vorzugsweise der kürzeren Stirnseiten des als Rechteck ausgebildeten Scheibenverbunds, angeordnet sind.

Vorteilhaft ist es, wenn die Verstärkungen mit wenigstens zwei Scheiben unmittelbar verbunden, beispielsweise verklebt, sind. Die Verstärkungen liegen in diesem Fall direkt an den sich gegenüberliegenden Innenseiten benachbarter Scheiben an.

Vorteilhaft ist es, wenn die Verstärkungen jeweils einen Metallblock umfassen oder als Metallblock ausgebildet sind, wobei der Metallblock die oben genannten Vertiefungen und/oder Bolzen aufweisen sollte.

Vorteilhaft ist es, wenn die Verstärkungen zumindest teilweise in den Kleber eingebettet sind. So ist es denkbar, dass die Verstärkungen mit Ausnahme der Bereiche, die direkt an benachbarten Scheiben anliegen und mit Ausnahme der Bereiche, die zwecks der Lagerung an einem Träger von außen zugänglich sind, vollständig mit dem Kleber umgeben sind.

Vorteilhaft ist es, wenn der Kleber die Scheiben zumindest abschnittsweise nach außen hin überragt. Hierdurch entsteht ein Kantenschutz für die Scheiben, so dass Beschädigungen vermieden werden können.

Vorteilhaft ist es, wenn der Kleber ein Kunststoff, z. B. ein Kleber auf Acrylbasis, ist. Ebenso kann als erfindungsgemäßer Kleber ein Kleber auf PU-Basis zum Einsatz kommen. Schließlich können auch Mischungen der genannten Produkte untereinander oder mit Silikon Verwendung finden. Generell ist der Kleber nicht auf bestimmte Stoffklassen bzw. chemische Verbindungen beschränkt. Vielmehr ist es ausschlaggebend, dass der Kleber zumindest nach ihrer Aushärtung transparent ist, um einen Blick durch die anliegenden Scheiben und auch durch den Kleber zu ermöglichen. Ferner sollte der Kleber an den Scheiben haften, um eine Verbindung der Scheiben zu ermöglichen.

Vorteilhaft ist es, wenn neben dem Kleber und den Verstärkungen keine weiteren Elemente zwischen den Scheiben angeordnet sind. Ebenso sollte der Scheibenverbund auch von außen durch keinerlei Umrahmungen umgeben sein, um einen freien Blick durch den Scheibenverbund zu gewährleisten.

Vorteilhaft ist es, wenn die Scheiben gemeinsam mit dem Kleber einen abgeschlossenen hohlen Innenraum des Scheibenverbunds begrenzen. Der Scheibenverbund ist in diesem Fall als Isolierglasscheibe ausgebildet. Insbesondere, wenn der Scheibenverbund neben den Scheiben und dem Kleber ein oder mehrere Verstärkungen aufweist, die vorzugsweise zumindest hauptsächlich aus Metall oder Kunststoff bestehen, kann der Scheibenverbund über entsprechende Scharniere, Bolzen oder sonstige Anbindungen an einem oder mehreren entsprechenden Lagern eines Kühlmöbels befestigt werden und damit als Tür oder andere Zugriffsöffnungsbegrenzung dienen.

Vorteilhaft ist es, wenn der Innenraum mit einem Gas bzw. Gasgemisch, beispielsweise einem Edelgas oder Luft, gefüllt ist. Ebenso ist es denkbar, dass der Innenraum teilweise oder auch vollständig mit einer transparenten (d. h durchsichtigen) Flüssigkeit, z. B. Wasser oder einer wässrigen Substanz, gefüllt ist. Auch sind transparente Feststoff nicht ausgeschlossen, die beispielweise als erstarrte Schmelze vorliegen können.

Vorteilhaft ist es, wenn eine den Innenraum des Scheibenverbunds begrenzende innere Oberfläche des Klebers senkrecht zu den Scheiben verläuft. Der Kleber besitzt in diesem Fall in einem senkrecht zu den Scheiben verlaufenden Schnitt eine im Wesentlichen rechteckige Form, wobei die nach au-ßen gerichteten Oberflächenabschnitte des Klebers auch konvex ausgebildet sein können.

Vorteilhaft ist es, wenn eine der Scheiben auf seiner Außenseite mit wenigstens einem Griff versehen ist, wobei der Griff oder ein Trägerelement des Griffs beispielsweise mit der Scheibe verklebt ist. Der Scheibenverbund kann in diesem Fall als Tür oder Fenster Verwendung finden.

Vorteilhaft ist es, wenn der Scheibenverbund zusätzlich zu dem genannten Randbereich eine oder mehrere zwischen den benachbarten Scheiben verlaufende Verstrebungen aufweist, die ebenfalls aus einer transparenten und/oder transparent aushärtenden Masse bestehen. Der Innenraum des Scheibenverbunds kann in diesem Fall in mehrere hohle Abschnitte unterteilt werden. Die Stabilität des Scheibenverbunds wird hierdurch erhöht.

Vorteilhaft ist es, wenn sich der transparent ausgehärtete Kleber über den gesamten Umfang des Scheibenverbunds erstreckt. Der Kleber bildet in diesem Fall einen rahmenförmigen Bereich, der sich zwischen den Scheiben erstreckt und den innenliegenden Hohlraum entlang des gesamten Randbereichs des Scheibenverbunds umgibt.

Vorteilhaft ist es, wenn der Scheibenverbund einen Abschnitt eines Warenpräsentationsmöbels, insbesondere eines Kühlmöbels, das der Aufnahme und Präsentation von zu kühlenden Waren, vorzugsweise Lebensmitteln, dient, bildet, wobei das Warenpräsentationsmöbel einen Aufnahmeraum für Waren umfasst, und wobei der Abschnitt der Begrenzung des Aufnahmeraums nach außen hin dient und zumindest teilweise lichtdurchlässig ist, um einen Blick durch den Abschnitt in den Aufnahmeraum zu ermöglichen.

Der genannte Kleber kann beispielsweise ein Kleber auf Acrylbasis sein. Während der Herstellung des Scheibenverbunds bzw. des Abschnitts (Tür bzw. Außenwandung oder Zwischenwandung) des Warenpräsentationsmöbels können beispielsweise zwei oder mehr Scheiben parallel ausgerichtet und auf Abstand fixiert werden. Anschließend wird im Randbereich des Scheibenverbunds bzw. einem Teil des Randbereichs der Klebstoff eingebracht und anschließend, beispielsweise mit Hilfe von UV-Strahlung, ausgehärtet. Der Kleber sollte vor dem Aushärten eine zähflüssige Konsistenz aufweisen, um ihn einfach zwischen die entsprechenden Scheibenabschnitte einbringen zu können, ohne dass die Gefahr besteht, dass der Kleber in Bereiche verläuft, in denen er nicht gewünscht ist.

Insbesondere ist es von Vorteil, wenn der Kleber als Kleber vorliegt, der vor dem Aushärten hochviskos ist, um ihn vor dem Aushärten zwischen die entsprechenden Bereiche benachbarter Scheiben einbringen zu können. Bei dem Kleber kann es sich prinzipiell um einen Mehrkomponentenkleber handeln, der nach dem Vermischen der jeweiligen Komponenten automatisch aushärtet. Ebenso können Ein- oder Mehrkomponentenkleber zum Einsatz kommen, die durch einen zusätzlichen Verfahrensschritt, beispielsweise eine UV-Bestrahlung, aushärten.

Der Scheibenverbund kann zudem, vorzugsweise im Bereich der oberen und/oder unteren Stirnseite, einen Spacer aufweisen, der die Scheiben auf Abstand hält. Der Spacer kann mit den Scheiben verklebt sein und ist vorzugsweise kanalförmig ausgebildet, wobei der Kanal vorzugsweise ein Trocknungsmittel beinhaltet, das Feuchtigkeit, die sich zwischen den Scheiben befindet, binden kann, um ein Beschlagen des Scheibenverbunds zu verhindern. Zudem kann der Spacer gleichzeitig die genannte Verstärkung bilden, über den der Scheibenverbund mit einem Träger, beispielsweise einem Rahmenelement, in dem der Scheibenverbund beweglich, vorzugsweise um eine durch die Verstärkungen verlaufende imaginäre Schwenkachse, verschwenkbar, gehalten ist.

Auch ein den Kleber aufweisender Wandabschnitt eines Warenpräsentationsmöbels kann auf vergleichbare Weise aufgebaut sein, d. h. der Wandabschnitt kann den genannten Scheibenverbund umfassen oder durch diesen gebildet sein. Der Randbereich des Scheibenverbunds kann wiederum Abschnitte aufweisen, die einen Spacer umfassen. Ebenso sind Abschnitte möglich, die, vorzugsweise ausschließlich, den genannten Kleber aufweisen. Von Vorteil kann es ferner sein, wenn zumindest eine erste Scheibe des Scheibenverbunds wenigstens eine zweite Scheibe des Scheibenverbunds in einer Längs- und/oder Querrichtung des Scheibenverbunds zumindest abschnittsweise überragt, so dass der Scheibenverbund in einem Querschnitt ein stufenförmiges Profil aufweist. Die Scheiben eines Scheibenverbunds können somit durchaus unterschiedliche Abmessungen aufweisen. Der überragende Abschnitt der die wenigstens eine weitere Scheibe überragenden Scheibe könnte z. B. als Anschlagsfläche dienen, über die die Scheibe beispielsweise nach einem Einbau in ein Kühlmöbel entlang einer Gleitfläche verschoben werden könnte.

Generell sei an dieser Stelle auch darauf hingewiesen, dass die Scheiben des Scheibenverbunds nicht zwangsläufig rechteckig sein müssen. So ist es ebenfalls möglich, dass einzelne oder alle Scheiben eines Scheibenverbunds rund oder oval geformt sind oder eine sonstige Form aufweisen, die von einem Rechteck abweicht.

Ferner kann der Kleber derart zwischen benachbarte Scheiben eingebracht sein, dass er eine oder mehrere Scheiben nach außen hin überragt. Der Kleber bildet in diesem Fall einen Kantenschutz des Scheibenverbunds, so dass die Gefahr einer Beschädigung der Scheiben vermindert ist.

Des Weiteren kann der Scheibenverbund neben dem genannten Kleber, den Scheiben und eventuell vorhandenen Verstärkungen auch weitere Elemente umfassen, die nicht unbedingt der Stabilität des Scheibenverbunds dienen. Denkbar sind beispielsweise zwischen den Scheiben angeordnete bzw. in den Kleber zumindest teilweise eingebettete Beleuchtungselemente (z. B. LED-Lichtquellen) oder auch Heizelemente (z. B. in Form eines oder mehrerer Heizdrähte), die ein Beschlagen des Scheibenverbunds verhindern. Schließlich betrifft die Erfindung ein Verfahren zur Herstellung eines Scheibenverbunds gemäß Anspruch 1, sofern der Scheibenverbund wenigstens zwei, beispielsweise parallel zueinander verlaufende, Scheiben umfasst, und sofern die Scheiben in einem Randbereich des Scheibenverbunds zumindest abschnittsweise mit Hilfe eines transparent ausgehärteten Klebers verbunden sind).

Das Verfahren gemäß Anspruch 10 zeichnet sich durch die folgenden, vorzugsweise unmittelbar zeitlich nacheinander ablaufenden Verfahrensschritte aus:
Zunächst werden die für den späteren Scheibenverbund vorgesehenen Scheiben in einem vorgegebenen Abstand zueinander platziert und entsprechend fixiert bzw. gehalten, wobei der Abstand im Wesentlichen dem Abstand entsprechen sollte, den die Scheiben auch im fertigen Scheibenverbund aufweisen sollen.

Im nächsten Schritt wird ein transparent aushärtender viskoser Kleber zwischen ausgewählte Abschnitte der jeweiligen Scheiben eingebracht. Der Kleber wird vorzugsweise zwischen zwei benachbarte Randbereiche zweier benachbarter Scheiben eingebracht, wobei hinsichtlich möglicher Eigenschaften des Klebers auf die entsprechenden Ausführungen in der übrigen Beschreibung bzw. auf die Ansprüche verwiesen wird.

Alternativ hierzu ist es auch möglich, zunächst den genannten Kleber in einer Aufnahme (z. B. einer Vertiefung) vorzuhalten und die Scheiben zueinander beabstandet in den Kleber teilweise einzutauchen, so dass sich der Kleber nach dem Eintauchen zumindest teilweise zwischen den beabstandeten Scheiben befindet.

Nach dem Eintauchen bzw. nachdem der Kleber im Rahmen der obigen ersten Alternative zwischen die Scheiben eingebracht wurde, folgt das Aushärten des Kleber, wobei dies je nach Art des Klebers automatisch oder durch entsprechende Zusatzschritte (z. B. UV-Bestrahlung oder Erwärmung) bewirkt wird. In jedem Fall erfolgt das Aushärten derart, dass der Kleber spätestens beim Aushärten an den mit ihr in Kontakt stehenden Abschnitten der jeweiligen Scheiben haftet, so dass spätestens beim Aushärten des Klebers ein Scheibenverbund mit mehreren mit Hilfe des Klebers verbundenen Scheiben entsteht.

Von Vorteil ist es, wenn die Scheiben im Rahmen des beschrieben Platzierens der Scheiben jeweils über einen ihrer Randbereiche in eine Form eingebracht werden und die Form nach dem Beendigen des Aushärtvorgangs wieder vom Scheibenverbund entfernt wird. Bei der Form kann es sich beispielsweise um eine zumindest teilweise flexible Form handeln, die beispielsweise rinnenförmig geformt sein kann. In jedem Fall ist es von Vorteil, wenn die Form neben der korrekten Platzierung der Scheiben auch der Aufnahme des Klebers dient. Der Kleber kann also vor oder nach dem Platzieren der Scheiben in die Form eingebracht werden und wird von dieser auch während des Aushärtens an der gewünschten Stelle gehalten.

Vorteilhafterweise kommt eine Form zum Einsatz, deren mit den Scheiben in Kontakt kommenden Abschnitte zumindest abschnittsweise elastisch ausgebildet sind. Hierdurch wird ein Entfernen des Klebers von der Form nach dem Aushärten erleichtert bzw. ein Anhaften des Klebers an der Form vermieden. Die Form kann nach dem Aushärten des Klebers problemlos von dem Scheibenverbund entfernt, gereinigt und zur Herstellung eines neuen Scheibenverbunds wiederverwendet werden. Denkbar ist es in diesem Zusammenhang beispielsweise, die Form oder die mit dem Kleber in Kontakt kommenden Abschnitte derselben aus einem Silikon zu fertigen.

Schließlich ist es von Vorteil, wenn der Kleber vor dem Aushärten bezüglich der Scheiben derart angeordnet wird, dass der Kleber und die Scheiben vor dem Aushärten derart relativ zueinander angeordnet werden, dass der Kleber wenigstens eine der Scheiben des Scheibenverbunds nach Beendigung des Aushärtens zumindest teilweise nach außen hin überragt und damit einen Kantenschutz des Scheibenverbunds bildet. Beispielsweise wäre es denkbar, dass die oben genannte Form einen konvexen unteren Formabschnitt aufweist. Werden die Scheiben nun derart in der Form platziert, dass sich der konvexe Formabschnitt zwischen den entsprechenden Scheiben befindet, so weist auch der in die Form eingebrachte Kleber nach dem Aushärten eine konvexe Form auf und überragt damit die benachbarten Scheiben zumindest geringfügig.

Im Folgenden werden Ausführungsbeispiele der bisher beschriebenen Erfindungen gezeigt. Es zeigen:
- **Figur 1**: eine Frontansicht eines erfindungsgemäßen Scheibenverbunds,

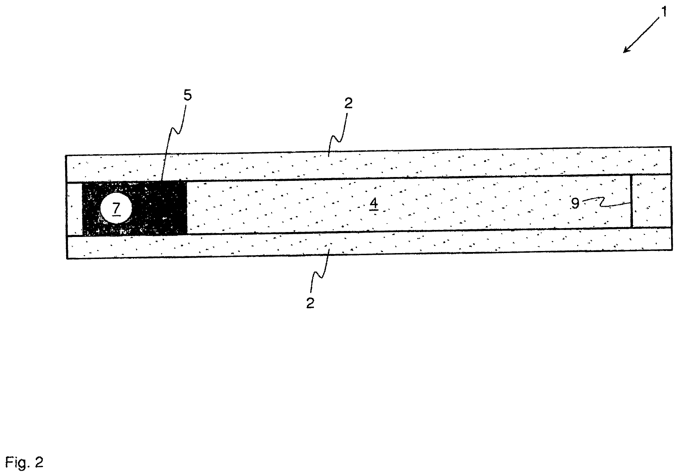

- **Figur 2**: eine Draufsicht auf den in Figur 1 gezeigten Scheibenverbund,
- **Figur 3**: eine Frontansicht eines Warenpräsentationsmöbels,
- **Figur 4**: eine Tür eines Warenpräsentationsmöbels,
- **Figur 5**: eine von oben betrachtete Schnittdarstellung der Tür eines Warenpräsentationsmöbels, z. B. geschnitten entlang der Linie B-B' in Figur 4,
- **Figur 6**: ein von der Seite betrachteter Ausschnitt einer Schnittdarstellung des oberen Bereichs einer Tür eines Warenpräsentationsmöbels, z. B. geschnitten entlang der Linie A-A' in Figur 4,
- **Figur 7**: eine Schnittdarstellung eines Ausschnitts eines erfindungsgemäßen Scheibenverbunds,
- **Figur 8**: eine perspektivische Ansicht eines Ausschnitts des teilweise in Figur 7 gezeigten Scheibenverbunds,
- **Figur 9**: einen Formträger mit einer eingelegten Form für die Herstellung eines erfindungsgemäßen Scheibenverbunds,
- **Figur 10**: Schnittdarstellungen der in Figur 9 gezeigten Vorrichtung während des Herstellungsprozesses, und
- **Figur 11**: die in Figur 10 gezeigte Vorrichtung im Querschnitt sowie einen Querschnitt eines damit hergestellten Scheibenverbunds.

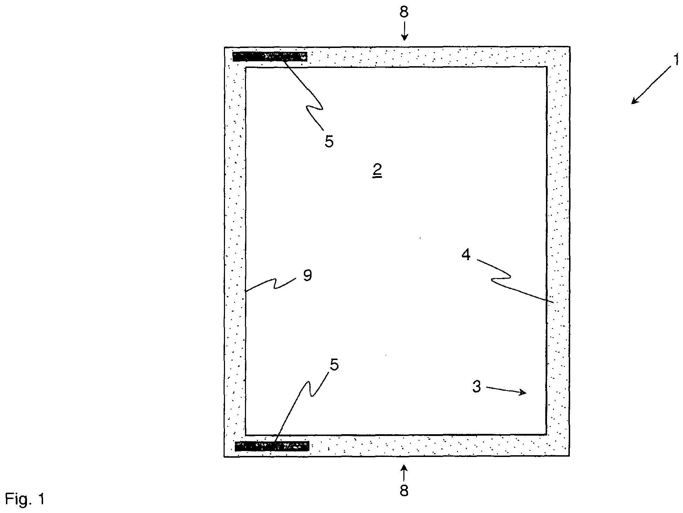

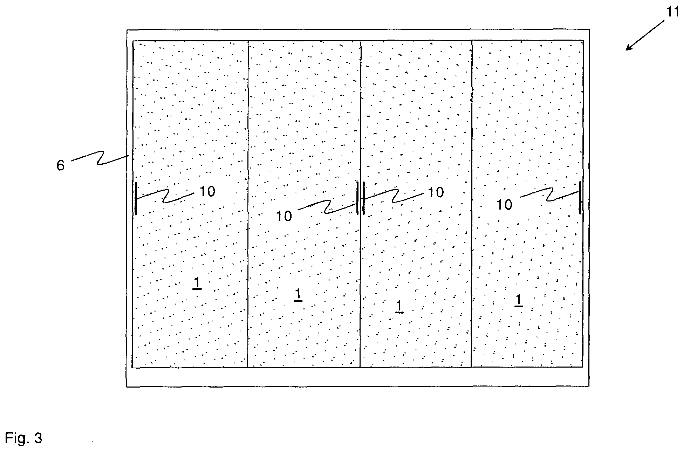

Figur 1 zeigt einen erfindungsgemäßen Scheibenverbund 1. Der Scheibenverbund 1 umfasst wenigstens zwei, beispielsweise parallel verlaufende, Scheiben 2, die in ihrem umfangsseitigen Randbereich 3 mit Hilfe eines transparent ausgehärteten Klebers 4 verbunden sind, wobei deren nach innen weisende Oberflächen 9 vorzugsweise senkrecht zu den Scheiben 2 verlaufen. Wie ein Vergleich der Figuren 1 (Frontansicht) und 2 (Draufsicht auf den in Figur 1 gezeigten Scheibenverbund 1) zeigt, kann zwischen den Scheiben 2 jeweils in einem Eckbereich des Scheibenverbunds 1 eine Verstärkung 5 angebracht sein, die in den Kleber 4 eingebettet ist und die eine Vertiefung 7 (oder alternativ einen Bolzen) aufweisen kann, über die der Scheibenverbund 1 mit einem Träger 6, beispielsweise einem Rahmen eines in Figur 3 gezeigten Warenpräsentationsmöbels 11, verbindbar ist.

Der Scheibenverbund 1 kann prinzipiell überall dort eingesetzt werden, wo lichtdurchlässige Elemente Verwendung finden. Beispielsweise kann der Scheibenverbund 1 als Tür- oder Fensterelement oder als sonstiges Abgrenzungselement eingesetzt werden.

Insbesondere kann der Scheibenverbund 1 als Schiebe- oder Schwingtür eingesetzt werden, vorzugsweise für ein Warenpräsentationsmöbel 11, wie es beispielhaft in Figur 3 gezeigt ist. Generell bestehen die genannten Türen, insbesondere bei der Verwendung in Kühlmöbeln aus zwei oder mehr, vorzugsweise parallel verlaufenden, Scheiben 2, um die Isolationswirkung der Türen zu verbessern. Da die Scheiben 2 miteinander verbunden, beispielsweise verklebt, werden müssen, besitzen die resultierenden Türen im Stand der Technik auch immer einen undurchsichtigen Randbereich 3, der jedoch bei der Präsentation von Waren als störend empfunden wird.

Es wird daher vorgeschlagen, wenigstens einen der Randbereiche 3, vorzugsweise den gesamten umlaufenden Randbereich 3 einer entsprechenden, mit einem Griff 10 versehenen, Tür, ausschließlich mit Hilfe eines transparent ausgehärteten Klebers 4 zu versehen und die Scheiben 2 in diesem Bereich hierdurch zu verbinden. Bei dem Kleber 4 kann es sich beispielsweise um einen, vorzugsweise auf PU- oder Acrylbasis basierenden, Kleber handeln, der bei der Montage der Tür zwischen benachbarte Scheiben 2 der Tür gegeben wird und nach dem Aushärten eine Verbindung der entsprechenden Scheiben 2 bewirkt.

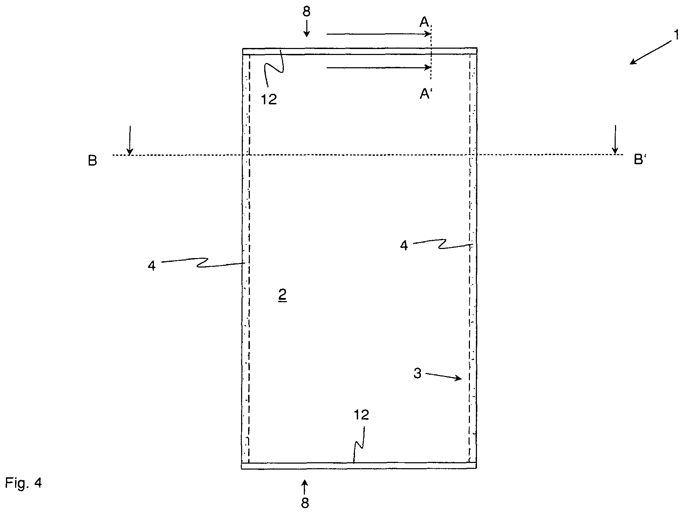

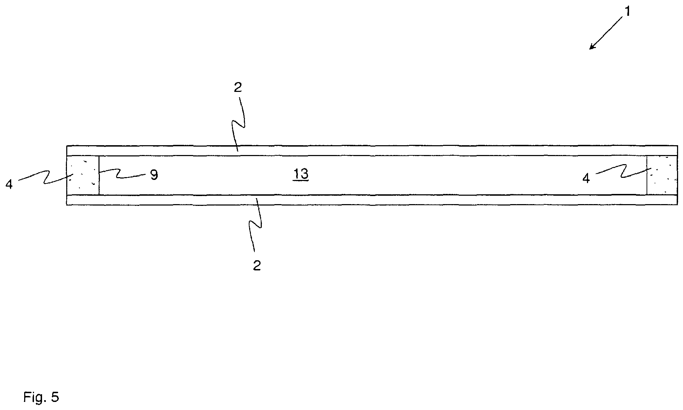

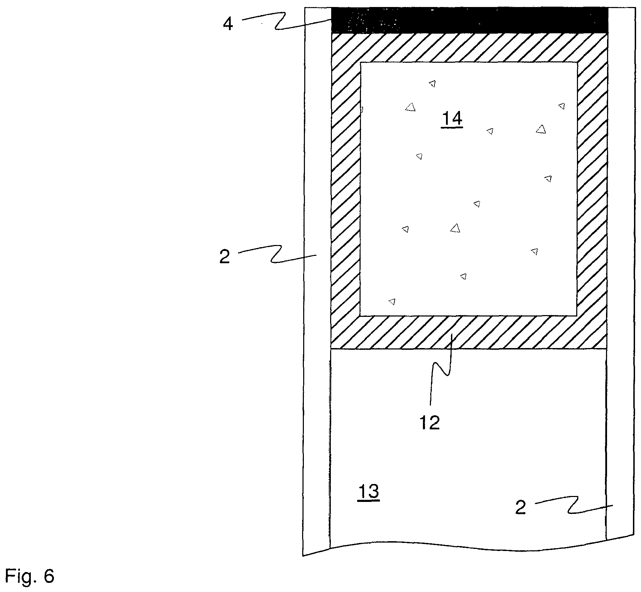

Der Kleber kann beispielsweise, wie in Figur 4 gezeigt (die prinzipiell eine Tür eines Warenpräsentationsmöbels 11 darstellt) ausschließlich in den beiden seitlichen Randbereichen 3 der Tür angeordnet sein (siehe auch Figur 5, die einen Schnitt entlang der Linie B-B' in Figur darstellt). Im Bereich der Stirnseiten 8 könnten schließlich sogenannte Spacer 12 angeordnet sein (siehe auch den Schnitt entlang der Linie A-A' in Figur 4, der in Figur 6 dargestellt ist). Die Spacer 12 könnten z. B. einen länglichen Kanal umfassen, in dem sich ein hygroskopisches Material bzw. generell ein wasserbindendes Trocknungsmaterial 14 befinden kann und der nach außen mit Hilfe einer Dichtmasse oder dem genannten transparenten Kleber 4 flüssigkeitsdicht abgeschlossen sein kann. Das Trocknungsmaterial 14 bindet Wasser, das aus dem Innenraum 13 zwischen den einzelnen Scheiben 2 durch das Spacermaterial diffundiert und verhindert ein inneres Beschlagen der Scheiben 2 und damit der Türen.

Durch die Verwendung des transparent austrocknenden Klebers erhält man schließlich eine Tür, die von vorne gesehen (Figur 3) den Eindruck erweckt, als ob in den Bereichen, in denen sich der Kleber befindet, keinerlei Material zwischen den einzelnen Scheiben 2 vorhanden ist. Die Präsentationsfläche des Warenpräsentationsmöbels 11 wird hierdurch maximiert.

Selbstverständlich können neben vertikal ausgerichteten Türen auch andere Türen eines Warenpräsentationsmöbels 11, beispielsweise die Schiebetüren bzw. Truhenabdeckungen einer Kühltheke mit einem Scheibenverbund 1 ausgestattet werden, deren Scheiben 2 zumindest teilweise mit Hilfe des genannten Klebers 4 verbunden sind, um die Lichtdurchtrittsfläche des entsprechenden Scheibenverbunds 1 zu maximieren. Der Kleber 4 muss im Übrigen nicht gasdicht sein. Ausreichend ist in der Regel, wenn dieser flüssigkeitsdicht ist, um ein Eindringen von Flüssigkeit zu verhindern.

Ebenso kann der beschriebene Scheibenverbund 1 bei allen sonstigen Wandungen eines Warenpräsentationsmöbels 11 zum Einsatz kommen, die aus mehreren Scheiben 2 bestehen. Umfasst sind hierbei beispielsweise Seitenwandungen, die beweglich oder unbeweglich gelagert sein können.

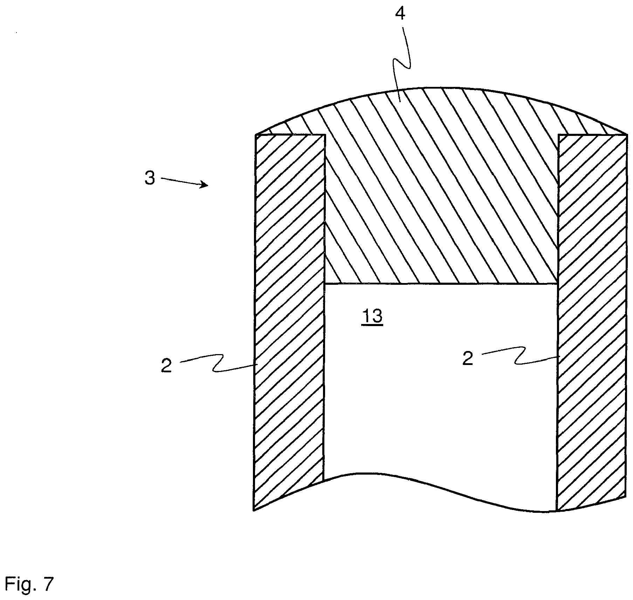

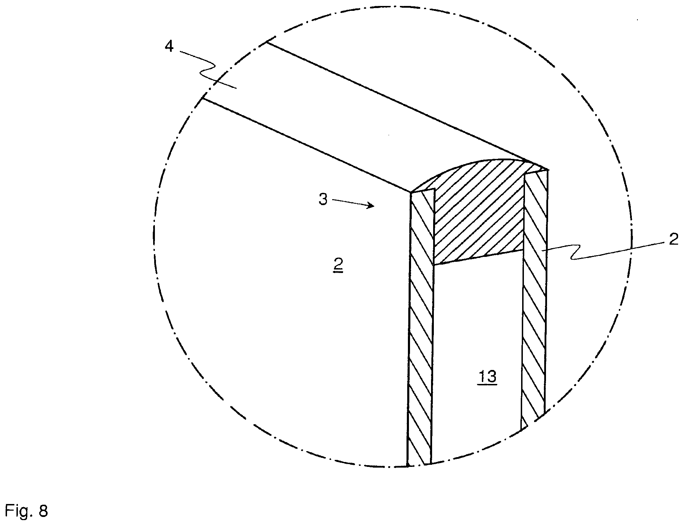

Ferner ist es denkbar, dass der Kleber 4 eine oder mehrere Scheiben 2 des Scheibenverbunds 1 in seinem äußeren Randbereich 3 überragt. Gezeigt ist dies in Figur 7 bzw. der in Figur 8 gezeigten Perspektive. Der Kleber 4 wirkt in diesem Fall als Kantenschutz der Scheiben 2, so dass die Gefahr deren Beschädigung entsprechend verringert ist (in Figur 8 sind im Übrigen nur die Linien/Kanten gezeigt, die direkt sichtbar sind; selbstverständlich sind aufgrund der Transparenz der Scheiben 2 und des Klebers 4 eigentlich weitere Linien bzw. Kanten sichtbar, auf deren Darstellung jedoch aus Übersichtsgründen verzichtet wurde).

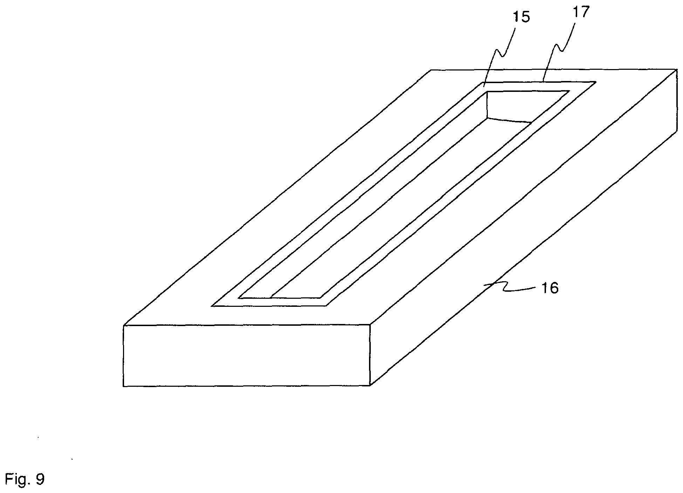

Im Folgenden wird Bezug genommen auf die Figuren 9 bis 11.

Um nun den beschriebenen Scheibenverbund 1 herzustellen, kann ein in Figur 9 gezeigter Formträger 16 zum Einsatz kommen. Unabhängig von der genauen Formgebung des Formträgers 16 ist es von Vorteil, wenn dieser eine Aufnahme 17 für eine vorzugsweise elastisch ausgebildete Form 15 aufweist. Beispielsweise wäre es denkbar, dass die Aufnahme 17 als, z. B. nutförmige, Vertiefung ausgebildet ist, in die die genannte Form 15 lösbar eingebracht wird.

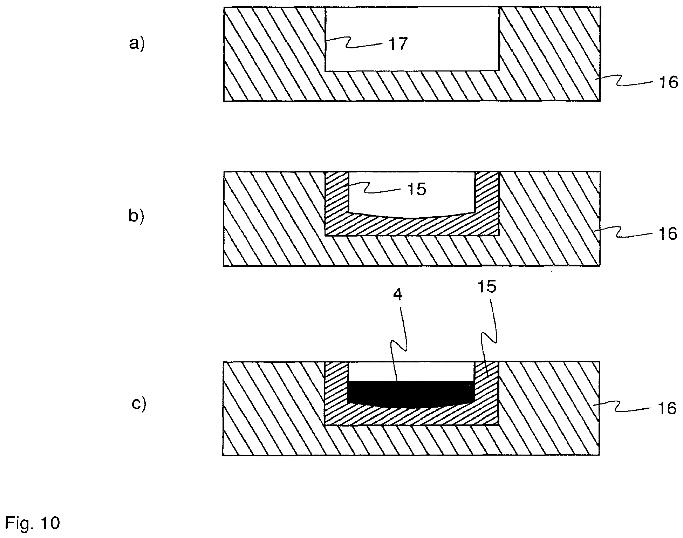

Einen Querschnitt eines möglichen Formträgers 16 zeigt Figur 10 a), während Figur 10 b) den Formträger mit eingebrachter Form 15 zeigt.

Um nun wenigstens zwei Scheiben 2 zu einem Scheibenverbund 1 zu verbinden, ist es nun in einer möglichen Variante vorgesehen, dass die Form zunächst mit dem beschriebenen Kleber befüllt wird (Figur 10 c)).

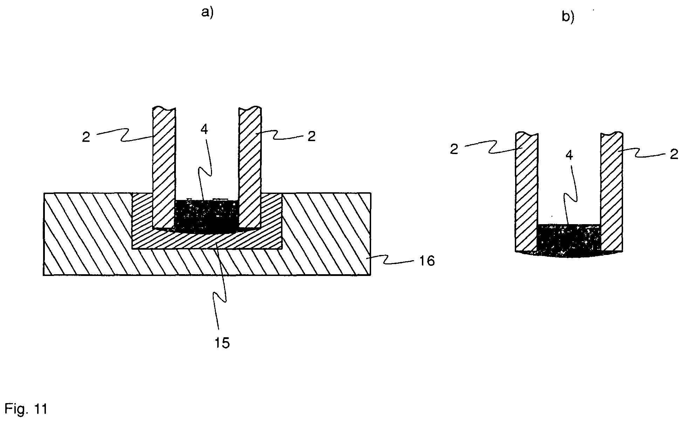

Anschließend werden die Scheiben 2 des späteren Scheibenverbunds 1, wie in Figur 11 a) gezeigt, in den Kleber 4 eingetaucht und entsprechend gehalten. Im nächsten Schritt erfolgt das Aushärten des Klebers 4, wobei dies bei einem Zweikomponentenkleber in der Regel nach einer gewissen Zeit seit dem Vermischen der Komponenten automatisch erfolgt.

Schließlich erfolgt die Entnahme des Scheibenverbunds 1 aus dem Formträger 16 bzw. aus der Form 15 (wird die Form mit dem Scheibenverbund 1 entfernt, so muss die Form 15 vom Scheibenverbund 1 in einem nachfolgenden Schritt entfernt werden).

Im Ergebnis erhält man einen Scheibenverbund 1, dessen Scheiben 2 zumindest in einem Randbereich mit Hilfe des ausgehärteten Klebers 4 miteinander verbunden sind. Sollen weitere Randbereiche miteinander verbunden werden, so muss der Scheibenverbund 1 lediglich gedreht und die beschriebenen Verfahrensschritte an einer anderen Stelle des Scheibenverbunds 1 wiederholt werden.

Die vorliegenden Erfindungen sind nicht auf die dargestellten und beschriebenen Ausführungsbeispiele beschränkt. Vielmehr sind beliebige Kombinationen der in den Ansprüchen und der Beschreibung beschriebenen und in den Figuren gezeigten Merkmale von der vorliegenden Offenbarung umfasst, soweit dies technisch nicht ausgeschlossen ist.

### Bezugszeichenliste

- 1: Scheibenverbund
- 2: Scheibe
- 3: Randbereich
- 4: Kleber
- 5: Verstärkung
- 6: Träger
- 7: Vertiefung
- 8: Stirnseite des Scheibenverbunds
- 9: den Innenraum des Scheibenverbunds begrenzende Oberfläche des Klebers
- 10: Griff
- 11: Warenpräsentationsmöbel
- 12: Spacer
- 13: Innenraum
- 14: Trocknungsmaterial
- 15: Form
- 16: Formträger
- 17: Aufnahme

## Patentansprüche

1. Tür, Seitenwand oder Zwischenwand für ein Warenpräsentationsmöbel (11), wobei die Tür, die Seitenwand oder die Zwischenwand als Scheibenverbund (1) ausgebildet ist, wobei der Scheibenverbund (1) wenigstens zwei parallel oder nicht-parallel zueinander verlaufende Scheiben (2) umfasst, wobei die Scheiben (2) in einem Randbereich (3) des Scheibenverbunds (1) zumindest abschnittsweise ausschließlich mit Hilfe eines transparent ausgehärteten Klebers verbunden sind, **dadurch gekennzeichnet, dass** der Scheibenverbund (1) im Bereich wenigstens zweier Eckbereiche eine zwischen den Scheiben (2) angeordnete Verstärkung (5) zur Anbindung an einen Träger (6) aufweist.

2. Tür, Seitenwand oder Zwischenwand für ein Warenpräsentationsmöbel (11), wobei die Tür, die Seitenwand oder die Zwischenwand als Scheibenverbund (1) ausgebildet ist, wobei der Scheibenverbund (1) wenigstens zwei parallel oder nicht-parallel zueinander verlaufende Scheiben (2) umfasst, wobei die Scheiben (2) in einem Randbereich (3) des Scheibenverbunds (1) abschnittsweise ausschließlich mit Hilfe eines transparent ausgehärteten Klebers verbunden sind, **dadurch gekennzeichnet, dass** sich der Kleber nicht über den gesamten umfangsseitigen Randbereich des Scheibenverbunds (1) erstreckt.

3. Tür, Seitenwand oder Zwischenwand gemäß dem vorangegangenen Anspruch, **dadurch gekennzeichnet, dass** der Scheibenverbund (1) im Bereich wenigstens zweier Eckbereiche eine zwischen den Scheiben (2) angeordnete Verstärkung (5) zur Anbindung an einen Träger (6) aufweist, wobei die Verstärkungen (5) beispielsweise jeweils wenigstens eine von außen zugängliche Vertiefung (7) und/oder einen von außen zugänglichen Bolzen aufweisen, über die der Scheibenverbund (1) mit dem Träger (6) verbindbar ist.

4. Tür, Seitenwand oder Zwischenwand gemäß einem der vorangegangenen Ansprüche, **dadurch gekennzeichnet, dass** die Verstärkungen (5) im Bereich zweier gegenüberliegenden Stirnseiten (8) des Scheibenverbunds (1) angeordnet sind, und/oder dass die Verstärkungen (5) mit wenigstens zwei Scheiben (2) unmittelbar verbunden, beispielsweise verklebt, sind, und/oder dass die Verstärkungen (5) jeweils einen Metallblock umfassen oder als Metallblock ausgebildet sind, und/oder dass die Verstärkungen (5) zumindest teilweise in den Kleber eingebettet sind.

5. Tür, Seitenwand oder Zwischenwand gemäß einem der vorangegangenen Ansprüche, **dadurch gekennzeichnet, dass** der Kleber die Scheiben (2) zumindest abschnittsweise nach außen hin überragt, und/oder dass der Kleber ein Kunststoff ist, und/oder dass neben dem Kleber und den Verstärkungen (5) keine weiteren Elemente zwischen den Scheiben (2) angeordnet sind.

6. Tür, Seitenwand oder Zwischenwand gemäß einem der vorangegangenen Ansprüche, **dadurch gekennzeichnet, dass** die Scheiben (2) gemeinsam mit dem Kleber einen abgeschlossenen hohlen Innenraum (13) des Scheibenverbunds (1) begrenzen, wobei der Innenraum (13) vorzugsweise mit einem Gas bzw. einem Gasgemisch und/oder einer transparenten Flüssigkeit gefüllt ist, und/oder dass eine den Innenraum (13) des Scheibenverbunds (1) begrenzende innere Oberfläche (9) des Klebers senkrecht zu den Scheiben (2) verläuft.

7. Tür, Seitenwand oder Zwischenwand gemäß einem der vorangegangenen Ansprüche, **dadurch gekennzeichnet, dass** eine der Scheiben (2) auf seiner Außenseite mit wenigstens einem Griff (10) versehen ist, wobei der Griff (10) oder ein Trägerelement des Griffs (10) beispielsweise mit der Scheibe (2) verklebt ist.

8. Tür, Seitenwand oder Zwischenwand gemäß einem der vorangegangenen Ansprüche, **dadurch gekennzeichnet, dass** der Scheibenverbund (1) zusätzlich zu dem genannten Randbereich (3) eine oder mehrere zwischen den benachbarten Scheiben (2) verlaufende Verstrebungen aufweist, die aus einer transparenten und/oder transparent aushärtenden Masse (4) bestehen.

9. Tür, Seitenwand oder Zwischenwand gemäß Anspruch 1, **dadurch gekennzeichnet, dass** sich der transparent ausgehärtete Kleber über den gesamten Umfang des Scheibenverbunds (1) erstreckt.

10. Tür, Seitenwand oder Zwischenwand gemäß einem der vorangegangenen Ansprüche, **dadurch gekennzeichnet, dass** zumindest eine erste Scheibe (2) des Scheibenverbunds (1) wenigstens eine zweite Scheibe (2) des Scheibenverbunds (1) in einer Längs- und/oder Querrichtung des Scheibenverbunds (1) zumindest abschnittsweise überragt, so dass der Scheibenverbund (1) in einem Querschnitt ein stufenförmiges Profil aufweist.

11. Tür, Seitenwand oder Zwischenwand gemäß einem der vorangegangenen Ansprüche, **dadurch gekennzeichnet, dass** der Scheibenverbund (1) einen Abschnitt eines Warenpräsentationsmöbels (11), insbesondere eines Kühlmöbels, das der Aufnahme und Präsentation von zu kühlenden Waren, vorzugsweise Lebensmitteln, dient, bildet, wobei das Warenpräsentationsmöbel (11) einen Aufnahmeraum für Waren umfasst, und wobei der Abschnitt der Begrenzung des Aufnahmeraums nach außen hin dient und zumindest teilweise lichtdurchlässig ist, um einen Blick durch den Abschnitt in den Aufnahmeraum zu ermöglichen.

12. Verfahren zur Herstellung einer Tür, Seitenwand oder Zwischenwand gemäß Anspruch 1, **gekennzeichnet durch** die folgenden Verfahrensschritte:
a1) Platzieren wenigstens zweier Scheiben (2) in einem vorgegebenen Abstand zueinander und Einbringen eines transparent aushärtenden viskosen Klebers zwischen ausgewählte Abschnitte der Scheiben (2), oder
a2) Vorhalten eines transparent aushärtenden viskosen Klebers in einer Aufnahme (17) und anschließendes teilweises Eintauchen wenigstens zweier zueinander beabstandeter Scheiben (2) in den Kleber, so dass sich der Kleber nach dem Eintauchen zumindest teilweise zwischen den beabstandeten Scheiben (2) befindet, und
b) Aushärten des Klebers, wobei der Kleber spätestens beim Aushärten an den mit ihr in Kontakt stehenden Abschnitten der jeweiligen Scheiben (2) haftet, so dass spätestens beim Aushärten des Klebers ein Scheibenverbund (1) mit mehreren mit Hilfe des Klebers verbundenen Scheiben (2) entsteht, wobei die Scheiben (2) in einem Randbereich (3) des Scheibenverbunds (1) zumindest abschnittsweise ausschließlich mit Hilfe des transparent ausgehärteten Klebers verbunden sind.

13. Verfahren zur Herstellung einer Tür, Seitenwand oder Zwischenwand gemäß Anspruch 2, **gekennzeichnet durch** die folgenden Verfahrensschritte:
a1) Platzieren wenigstens zweier Scheiben (2) in einem vorgegebenen Abstand zueinander und Einbringen eines transparent aushärtenden viskosen Klebers zwischen ausgewählte Abschnitte der Scheiben (2), oder
a2) Vorhalten eines transparent aushärtenden viskosen Klebers in einer Aufnahme (17) und anschließendes teilweises Eintauchen wenigstens zweier zueinander beabstandeter Scheiben (2) in den Kleber, so dass sich der Kleber nach dem Eintauchen zumindest teilweise zwischen den beabstandeten Scheiben (2) befindet, und
b) Aushärten des Klebers, wobei der Kleber spätestens beim Aushärten an den mit ihr in Kontakt stehenden Abschnitten der jeweiligen Scheiben (2) haftet, so dass spätestens beim Aushärten des Klebers ein Scheibenverbund (1) mit mehreren mit Hilfe des Klebers verbundenen Scheiben (2) entsteht, wobei die Scheiben (2) in einem Randbereich (3) des Scheibenverbunds (1) abschnittsweise ausschließlich mit Hilfe des transparent ausgehärteten Klebers verbunden sind.

14. Verfahren gemäß Anspruch 12 oder 13, **dadurch gekennzeichnet, dass** die Scheiben (2) im Rahmen von Schritt a1) oder a2) jeweils über einen ihrer Randbereiche in eine Form (15) eingebracht werden und die Form (15) nach Schritt b) wieder vom Scheibenverbund (1) entfernt wird.

15. Verfahren gemäß vorangegangenem Anspruch, **dadurch gekennzeichnet, dass** eine Form (15) zum Einsatz kommt, deren mit den Scheiben (2) in Kontakt kommenden Abschnitte zumindest abschnittsweise elastisch ausgebildet sind.

16. Verfahren gemäß einem der Ansprüche 12 bis 15, **dadurch gekennzeichnet, dass** der Kleber und die Scheiben (2) vor Schritt b) derart relativ zueinander angeordnet werden, dass der Kleber wenigstens eine der Scheiben (2) des Scheibenverbunds (1) nach Beendigung von Schritt b) zumindest teilweise nach außen hin überragt und damit einen Kantenschutz des Scheibenverbunds (1) bildet.

## Claims

1. Door, side wall or intermediate wall for a product presentation appliance (11), wherein the door, the side wall or the intermediate wall is formed as a laminated pane (1), the laminated pane (1) comprising at least two panes (2) running parallel or not parallel to one another, wherein the panes (2) are joined, at least in sections, in an edge area (3) of the laminated pane (1) exclusively with the help of a glue that is transparent after hardening, **characterized in that** the laminated pane (1) has a reinforcement (5) arranged between the panes (2) in the area of at least two corner areas for tying down to a support (6).

2. Door, side wall or intermediate wall for a product presentation appliance (11), wherein the door, the side wall or the intermediate wall is formed as a laminated pane (1), the laminated pane (1) comprising at least two panes (2) running parallel or not parallel to one another, wherein the panes (2) are joined in sections in an edge area (3) of the laminated pane (1) exclusively with the help of a glue that is transparent after hardening, **characterized in that** the glue does not extend over the entire circumferential edge area of the laminated pane (1).

3. Door, side wall or intermediate wall according to the preceding claim, **characterized in that** the laminated pane (1) has a reinforcement (5) arranged between the panes (2) in the area of at least two corner areas for tying down to a support (6), in which case the reinforcements (5) have in each case, for example, at least one depression (7) accessible from the exterior and/or a bolt accessible from the exterior, through which the laminated pane (1) can be joined to the support (6).

4. Door, side wall or intermediate wall according to one of the preceding claims, **characterized in that** the reinforcements (5) are arranged in the area of two opposite front sides (8) of the laminated pane (1), and/or that the reinforcements (5) are joined directly together with at least two panes (2), for example adhered, and/or that the reinforcements (5) comprise in each case a metal block or are executed as a metal block, and/or that the reinforcements (5) are embedded, at least partially, in the glue.

5. Door, side wall or intermediate wall according to one of the preceding claims, **characterized in that** the glue juts out from the panes (2) to the exterior, at least in sections, and/or that the glue is a plastic, and/or that no other elements are arranged between the panes (2) apart from the glue and the reinforcements (5).

6. Door, side wall or intermediate wall according to one of the preceding claims, **characterized in that** the panes (2) limit a closed hollow interior (13) of the laminated pane (1) together with the glue, in which case the interior (13) is filled preferably with a gas or gas mixture and/or a transparent liquid, and/or that an inner surface (9) of the glue limiting the interior (13) of the laminated pane (1) runs perpendicularly to the panes (2).

7. Door, side wall or intermediate wall according to one of the preceding claims, **characterized in that** one of the panes (2) is provided with at least one handle (10) on its external side, and the handle (10) or a support element of the handle (10) is glued to the pane (2), for example.

8. Door, side wall or intermediate wall according to one of the preceding claims, **characterized in that** the laminated pane (1), in addition to the above-mentioned edge area (3), has one or several struts running between the continuous panes (2) that consist of a transparent mass (4) and/or one that becomes transparent after hardening.

9. Door, side wall or intermediate wall according to claim 1, **characterized in that** the glue that is transparent after hardening extends over the entire circumference of the laminated pane (1).

10. Door, side wall or intermediate wall according to one of the preceding claims, **characterized in that** at least a first pane (2) of the laminated pane (1) protrudes, at least in sections, from at least a second pane (2) of the laminated pane (1) in longitudinal and/or transverse direction of the laminated pane (1), so that the laminated pane (1) has a stepped profile in cross section.

11. Door, side wall or intermediate wall according to one of the preceding claims, **characterized in that** the laminated pane (1) forms a section of a product presentation appliance (11), especially of a refrigeration appliance that serves for placing and presenting goods, preferably foodstuffs, to be refrigerated, in which case the product presentation appliance (11) comprises a space for placing goods and in which case the section serves to limit the space for placing goods towards the outside and is at least partially transparent to allow a view into the space for placing goods through the section.

12. Process for manufacturing a door, side wall or intermediate wall according to claim 1, **characterized by** the following process steps:
a1) Placing at least two panes (2) at a given distance from one another and introducing a viscous glue that becomes transparent after hardening between selected sections of the panes (2), or
a2) Holding a viscous glue that becomes transparent after hardening in a receptacle (17) and subsequent partial immersion into the glue of at least two panes (2) separated from one another, so that the glue after immersion lies at least partially between the separated panes (2), and
b) Hardening of the glue, in which case the glue adheres, no later than during hardening, onto the sections of the corresponding panes (2) making contact with it, so that a laminated pane (1) is created with several panes (2) joined together with the help of the glue no later than when the glue hardens, whereas in an edge area (3) of the laminated pane (1) the panes (2) are joined, at least in sections, exclusively with the help of a glue that is transparent after hardening.

13. Process for manufacturing a door, side wall or intermediate wall according to claim 2, **characterized by** the following process steps:
a1) Placing at least two panes (2) at a given distance from one another and introducing a viscous glue that becomes transparent after hardening between selected sections of the panes (2), or
a2) Holding a viscous glue that becomes transparent after hardening in a receptacle (17) and subsequent partial immersion into the glue of at least two panes (2) separated from one another, so that the glue after immersion lies at least partially between the separated panes (2), and
b) Hardening of the glue, in which case the glue adheres, no later than during hardening, onto the sections of the corresponding panes (2) making contact with it, so that a laminated pane (1) is created with several panes (2) joined together with the help of the glue no later than when the glue hardens, whereas in an edge area (3) of the laminated pane (1) the panes (2) are joined in sections exclusively with the help of a glue that is transparent after hardening.

14. Process according to claim 12 or 13, **characterized in that** the panes (2) are brought into a form (15) in each case through one of their edge areas as part of step a1) or a2) and the form (15) is removed once again from the laminated pane (1) after step b).

15. Process according to the preceding claim, **characterized in that** a form (15) is used whose sections that make contact with the panes (2) are executed elastically at least in sections.

16. Process according to one of the claims 12 to 15, **characterized in that** the glue and the panes (2) are arranged relative to one another in such a way before step b), that the glue protrudes at least partially from at least one of the panes (2) of the laminated pane (1) to the exterior after step b) has ended and thus forms an edge protection of the laminated pane (1).

## Revendications

1. Porte, paroi latérale ou paroi intermédiaire pour un meuble de présentation de marchandises (11), la porte, la paroi latérale ou la paroi intermédiaire étant réalisée sous forme d'un assemblage de vitres (1), assemblage de vitres (1) comprenant au moins deux vitres (2) s'étendant parallèlement ou non parallèlement l'une l'autre, sachant que les vitres (2) sont reliées exclusivement à l'aide d'un adhésif durci à l'état transparent au moins en certaines zones dans une zone de bordure (3) de l'assemblage de vitres (1) **caractérisé en ce que** l'assemblage de vitre (1) comporte dans la zone d'au moins deux zones d'angles un renforcement (5) disposé entre les vitres (2) pour la connexion avec un support (6).

2. Porte, paroi latérale ou paroi intermédiaire pour un meuble de présentation de marchandises (11), la porte, la paroi latérale ou la paroi intermédiaire étant réalisée sous forme d'un assemblage de vitres (1), assemblage de vitres (1) comprenant au moins deux vitres (2) s'étendant parallèlement ou non parallèlement l'une l'autre, sachant que les vitres (2) sont reliées exclusivement à l'aide d'un adhésif durci à l'état transparent en certaines zones dans une zone de bordure (3) de l'assemblage de vitres (1) **caractérisé en ce que** l'adhésif ne s'étend pas sur l'ensemble de la zone de bordure périphérique de l'assemblage de vitres (1).

3. Porte, paroi latérale ou paroi intermédiaire selon la revendication précédente, **caractérisé en ce que** l'assemblage de vitre (1) comporte dans la zone d'au moins deux zones d'angles un renforcement (5) disposé entre les vitres (2) pour la connexion avec un support (6), sachant que les renforcements (5) présentent respectivement, par exemple, au moins un approfondissement (7) accessible de l'extérieur et/ou un boulon accessible par l'extérieur, par lequel l'assemblage de vitre (1) peut être relié avec le support (6).

4. Porte, paroi latérale ou paroi intermédiaire selon l'une des revendications précédentes, **caractérisé en ce que** les renforcements (5) sont disposés dans la zone de deux faces frontales (8) opposées de l'assemblage de vitres (1), et/ou que les renforcements (5) sont reliés directement, par exemple collés, avec au moins deux vitres (2), et/ou que les renforcements (5) comportent respectivement un bloc métallique ou se présentent sous la forme d'un bloc métallique et/ou que les renforcements (5) sont au moins partiellement noyés dans l'adhésif.

5. Porte, paroi latérale ou paroi intermédiaire selon l'une des revendications précédentes, **caractérisé en ce que** l'adhésif déborde des vitres (2) vers l'extérieur au moins en certaines zones, et/ou que l'adhésif est une matière plastique, et/ou que outre l'adhésif et les renforcements (5), aucun autre élément n'est disposé entre les vitres (2).

6. Porte, paroi latérale ou paroi intermédiaire selon l'une des revendications précédentes, **caractérisé en ce que** les vitres (2), conjointement avec l'adhésif, limitent un espace intérieur (13) creux clos de l'assemblage de vitres (1), sachant que l'espace intérieur (13) est rempli de préférence d'un gaz ou d'un mélange de gaz et/ou d'un liquide transparent, et/ou qu'un surface (9) intérieure de l'adhésif limitant l'espace intérieur (13) de l'assemblage de vitre (1) s'étend perpendiculairement aux vitres (2).

7. Porte, paroi latérale ou paroi intermédiaire selon l'une des revendications précédentes, **caractérisé en ce que** l'une des vitres (2) est pourvu d'au moins une poignée (10) sur sa face extérieure, sachant que la poignée (10) ou un élément de support de la poignée (10) est par exemple collé avec la vitre (2).

8. Porte, paroi latérale ou paroi intermédiaire selon l'une des revendications précédentes, **caractérisé en ce que** l'assemblage de vitres (1) comporte en plus de la zone de bordure (3) citée un ou plusieurs entretoisements s'étendant entre les vitres (2) adjacentes, lesquels entretoisements se composent d'une masse transparente (4) et/ou transparente à l'état durci.

9. Porte, paroi latérale ou paroi intermédiaire selon la revendication 1, **caractérisé en ce que** l'adhésif transparent à l'état durci s'étend sut toute la circonférence de l'assemblage de vitres (1).

10. Porte, paroi latérale ou paroi intermédiaire selon l'une des revendications précédentes, **caractérisé en ce qu'**une première vitre (2) au moins de l'assemblage de vitres (1) surpasse au moins certaines sections au moins une seconde vitre (2) de l'assemblage de vitres (1) dans un sens longitudinal et/ou transversal de l'assemble de vitres (1), de sorte que l'assemblage de vitres (1) présente en une coupe transversale un profil étagé.

11. Porte, paroi latérale ou paroi intermédiaire selon l'une des revendications précédentes, **caractérisé en ce que** l'assemblage de vitres (1) forme un compartiment d'un meuble de présentation de marchandises (11), en particulier d'un meuble frigorifique, qui sert à accueillir et à présenter des marchandises à réfrigérer, de préférence des denrées alimentaires, sachant que le meuble de présentation de marchandises (11) comprend un espace d'accueil pour les marchandises, et sachant que le compartiment sert à la limitation de l'espace d'accueil vers l'extérieur et qu'il est au moins partiellement translucide afin de permettre la vue sur l'espace d'accueil à travers le compartiment.

12. Procédé pour fabriquer une porte, une paroi latérale ou une paroi intermédiaire selon la revendication 1, **caractérisé par** les étapes de procédé suivantes :
a1) placer au moins deux vitres (2) à une distance prédéterminée l'une de l'autre et appliquer un adhésif visqueux transparent à l'état durci entre des sections sélectionnées des vitres (2), ou
a2) mettre à disposition un adhésif visqueux transparent à l'état durci dans un creux (17) et, ensuite, immerger partiellement dans l'adhésif au moins deux vitres (2) distantes l'une de l'autre de sorte que l'adhésif se trouve au moins partiellement entre les vitres (2) distantes l'une de l'autre après l'immersion, et
b) laisser durcir l'adhésif, sachant que l'adhésif adhère sur les sections des différentes vitres (2) en contact avec lui au plus tard lors du durcissement, de sorte qu'il se forme au plus tard lors du durcissement de l'adhésif un assemblage de vitres (1) avec plusieurs vitres (2) reliées à l'aide de l'adhésif, sachant que les vitres (2) sont reliées exclusivement à l'aide de l'adhésif transparent à l'état durci au moins en certaines zones dans une zone de bordure (3) de l'assemblage de vitres (1).

13. Procédé pour fabriquer une porte, une paroi latérale ou une paroi intermédiaire selon la revendication 2, **caractérisé par** les étapes de procédé suivantes :
a1) placer au moins deux vitres (2) à une distance prédéterminée l'une de l'autre et appliquer un adhésif visqueux transparent à l'état durci entre des sections sélectionnées des vitres (2), ou
a2) mettre à disposition un adhésif visqueux transparent à l'état durci dans un creux (17) et, ensuite, immerger partiellement dans l'adhésif au moins deux vitres (2) distantes l'une de l'autre de sorte que l'adhésif se trouve au moins partiellement entre les vitres (2) distantes l'une de l'autre après l'immersion, et
b) laisser durcir l'adhésif, sachant que l'adhésif adhère sur les sections des différentes vitres (2) en contact avec lui au plus tard lors du durcissement, de sorte qu'il se forme au plus tard lors du durcissement de l'adhésif un assemblage de vitres (1) avec plusieurs vitres (2) reliées à l'aide de l'adhésif, sachant que les vitres (2) sont reliées exclusivement à l'aide de l'adhésif transparent à l'état durci au moins en certaines zones dans une zone de bordure (3) de l'assemblage de vitres (1).

14. Procédé selon la revendication 12 ou 13, **caractérisé en ce que** les vitres (2) sont respectivement mises en place par l'une de leurs zones de bordures dans un moule (15) dans le cadre des étapes a1) ou a2) et le moule (15) est à nouveau détaché de l'assemblage de vitres (1) après l'étape b).

15. Procédé selon la revendication précédente, **caractérisé en ce qu'**un moule (15) est utilisé, dont les sections entrant en contact avec les vitres (2) se présentent sous forme élastique au moins en certaines sections.

16. Procédé selon l'une des revendications 12 à 15, **caractérisé en ce que** l'adhésif et les vitres (2) sont disposés les uns par rapport aux autres avant l'étape b) de manière à ce que l'adhésif déborde au moins de l'une des vitres (2) de l'assemblage de vitres (1) au moins partiellement vers l'extérieur après la fin de l'étape b) et forme ainsi une protection d'arêtes de l'assemblage de vitres (1).
